# EUROPEAN PATENT APPLICATION

(11) **EP 2 460 447 A1**
(43) Date of publication of application: **06.06.2012**
(21) Application number: 10804321.7
(22) Date of filing: 22.07.2010
(51) Int. Cl.: A47G 23/08, B65G 17/22, B65G 23/14

(54) **FOOD AND DRINK CONVEYING DEVICE**

(30) Priority: 31.07.2009 JP 2009179437; 02.12.2009 JP 2009274548
(71) Applicant: Ishino Seisakusyo Co., Ltd., Ishikawa 921-8025 (JP)
(72) Inventor: ISHINO Haruki, Kanazawa-shi Ishikawa 921-8025 (JP); SASAHARA Shintaro, Kanazawa-shi Ishikawa 921-8025 (JP)
(74) Representative: Staudt, Hans-Peter
(86) International application number: PCT/JP2010/062369
(87) International publication number: WO 2011/013575

(57) **Abstract**

An object of the invention is to provide a food and drink conveying device where resistance produced in a curved path in the direction opposite to the direction in which the conveyor driving body is conveyed can be minimized. The conveyor driving body is provided with an annular belt body (15) which continuously travels along the travel path (1a). In addition, a guide means is provided with forward-moving rollers (37a) that are supported so as to be pivotable in a horizontal plane on the inner side of the forward-going belt body (15b) in a curved path (10a) and backward-moving rollers (37b) that are supported so as to be pivotable in a horizontal plane on the inner side of the backward-going belt body (15c) in the curved path (10a).

## Description

### Technical Field

The present invention relates to a food and drink conveying device that allows a travel body to travel along a travel path using a linking means when a conveyor driving body is driven.

### Background Art

Conventional food and drink conveying devices have a continuously running chain (conveyor driving body) when a driving motor, not shown, is driven; a conveying path (travel path) for conveying food or drink, such as sushi, from a kitchen to a customer; and a tray (travel body) with rollers that travels over the flat travel surface of the conveying path and carries a food or drink dish on which sushi is placed on top. In these food and drink conveying devices, the chain is guided in the corners so as to be slidable by chain guides (guide means) that are formed so as to have the same curvature as the corners (see Patent Document 1).

### Prior Art Document

### Patent Document

Patent Document 1: Japanese Unexamined Patent Publication 2008-44688 (page 5, FIG. 6)

### Summary of the Invention

### Problem to Be Solved by the Invention

In the invention in Patent Document 1, the chain (conveyor driving body) makes contact with stationary chain guides (guide means) through the entirety of the curved paths, and therefore a large amount of friction is generated in the direction opposite to the direction in which the chain is conveyed throughout the entirety of the chain guides when the chain is driven, and thus such a problem arises that the chain cannot be smoothly driven in the curved paths.

The present invention is provided in order to solve this problem, and an object of the invention is to provide a food and drink conveying device where the friction generated in the direction opposite to the direction in which the chain is conveyed in a curved path is made small.

### Means for Solving Problem

In order to achieve the above-described object, the food and drink conveying device according to the present invention is a food and drink conveying device having: a travel path having at least one curved path; a conveyor driving body provided along the travel path; a travel body that can travel along the above-described travel path with food or drink placed on top; a linking means for connecting the above-described conveyor driving body to the above-described travel body; and a guide means for guiding the conveyor driving body in the above-described curved path in the direction in which the above-described conveyor driving body is driven, wherein the above-described travel body travels along the above-described travel path using the above-described linking means when the above-described conveyor driving body is driven, and is **characterized in that**
the above-described conveyor driving body is provided with an annular belt body that continuously travels along the above-described travel path, and in addition the above-described guide means comprises a forward-moving roller that is supported so as to be pivotable in a horizontal plane on the inner side of the forward-moving belt body in the above-described curve path and a backward-moving roller that is supported so as to be pivotable in a horizontal plane on the inner side of the backward-moving belt body in the above-described curved path.
According to this feature, the forward-moving roller and the backward-moving roller roll in such a direction that the belt body is driven, and therefore the resistance that is received by the belt body from the forward-moving roller and the backward-moving roller is only the resistance against the rotation of the forward-moving roller and the backward-moving roller in the direction opposite to such a direction that the belt body is driven, and thus the belt body can be driven smoothly along the curved path. In addition, the backward-moving belt body is located between the forward-moving roller and the backward-moving roller so that the horizontal swaying of the belt body can be regulated by the forward-moving roller and the backward-moving roller.

The food and drink conveying device according to the present invention is **characterized in that** the above-described guide means is formed of a guide body comprising a forward-moving roller and a backward-moving roller.
According to this feature, a forward-moving roller and a backward-moving roller can be provided in a curved path at the same time by attaching a guide body to the curved path.

The food and drink conveying device according to the present invention is **characterized in that** a number of forward-moving rollers and a number of backward-moving rollers, which are the same as the above-described forward-moving roller and the above-described backward-moving roller, are aligned along the above-described curved path, respectively.
According to this feature, the conveyor driving body can be driven so as to be smoothly bent along the curved path. In addition, the width of the horizontal swaying of the belt body can be reduced by reducing the intervals between the adjacent forward-moving rollers and the adjacent backward-moving rollers so that the conveyor driving body can be driven smoothly.

The food and drink conveying device according to the present invention is **characterized in that** a looped sub-belt body goes around at least some of either the above-described number of forward-moving rollers or the above-described number of backward-moving rollers.
According to this feature, the rollers around which the sub-belt body goes do not make direct contact with the belt body, and therefore noise can be prevented from being made when the belt body makes contact with the roller, and at the same time, the belt body can be prevented from being worn down.

The food and drink conveying device according to the present invention is **characterized in that** the above-described belt body has a recess created in the direction perpendicular to the direction in which the belt body is conveyed, and one end of the above-described linking means is contained in and fixed to the recess.
According to this feature, the end of the linking means that is connected to the belt body does not make contact with the forward-moving roller or the backward-moving roller, and therefore friction between the linking means and the forward-moving roller or between the linking means and the backward-moving roller can be prevented from being generated.

### Brief Description of the Drawings

FIG. 1 is a plan diagram showing the entirety of the food and drink conveying device according to the first embodiment;
FIG. 2 is a plan diagram showing an ordered item conveying path with uncovered portions;
FIG. 3 is a plan diagram showing the first corner without a cover;
FIG. 4 is an exploded diagram showing a travel body;
FIG. 5 is a side diagram showing a travel body in a straight path of an ordered item conveying path;
FIG. 6 is a plan diagram showing a travel body in a straight path of an ordered item conveying path;
FIG. 7 is a cross-sectional diagram along A-A in FIG. 2;
FIG. 8 is a cross-sectional diagram along B-B in FIG. 2;
FIG. 9(a) is a plan diagram showing a belt bracket, and FIG. 9(b) is a side diagram showing a belt bracket;
FIG. 10 is a cross-sectional diagram along C-C in FIG. 7;
FIG. 11 is a plan diagram showing a travel body in the first corner of an ordered item conveying path; and
FIG. 12 is a plan diagram showing the uncovered first corner in the second embodiment.

### Best Mode for Carrying Out the Invention

The food and drink conveying devices according to the preferred embodiments of the present invention are described below.

### First Embodiment

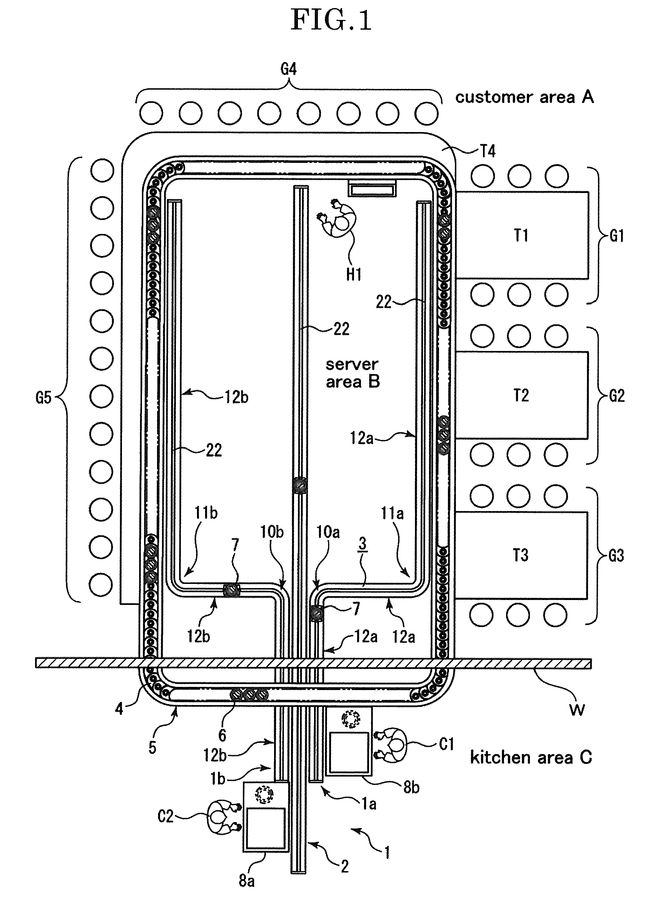

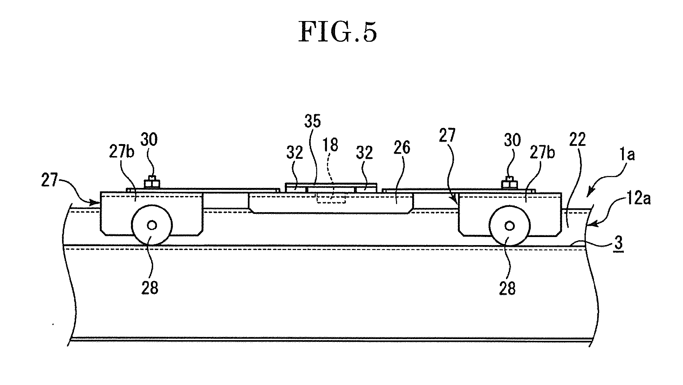

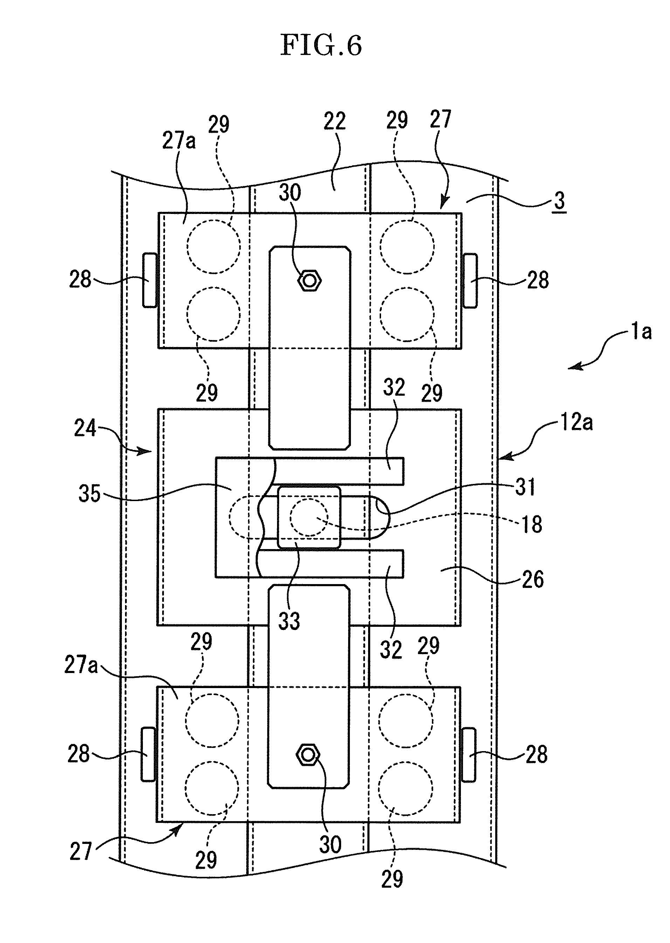

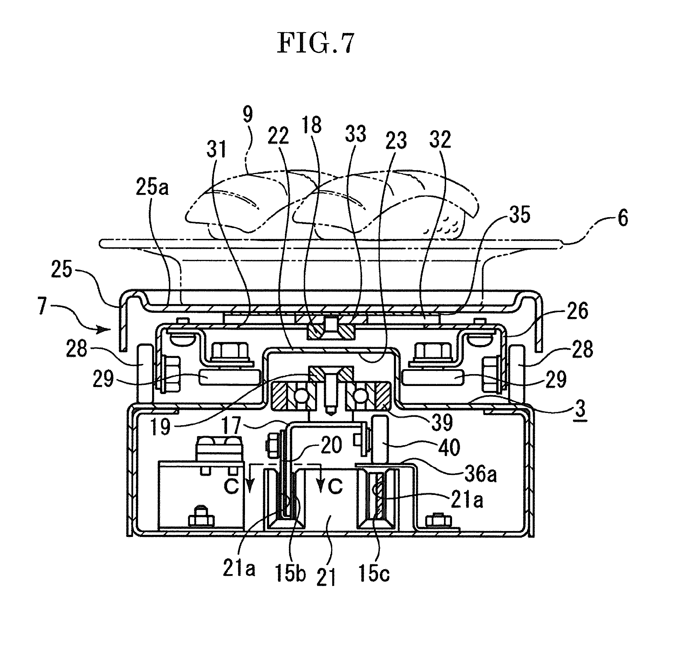

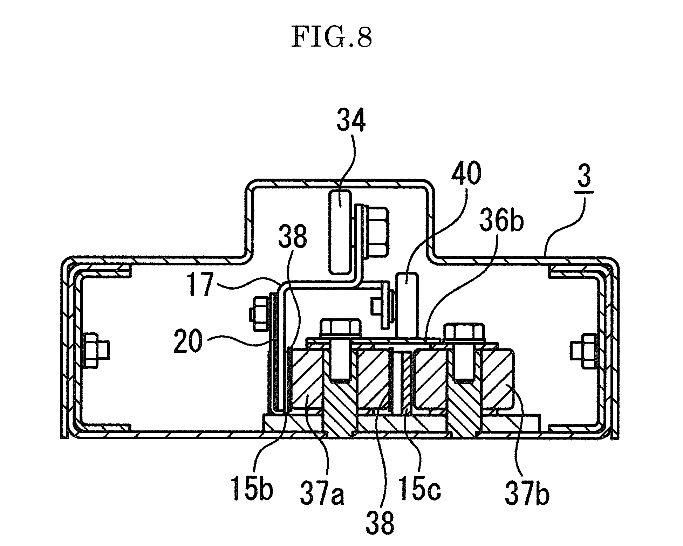

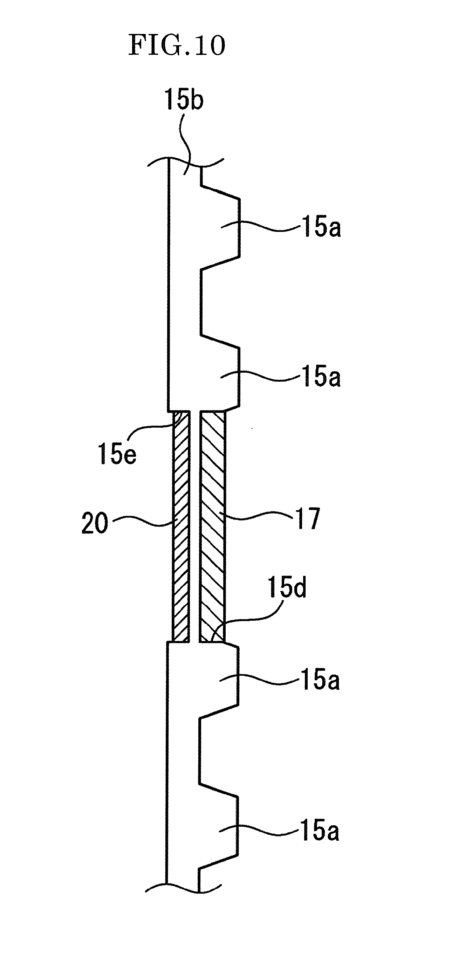

The food and drink conveying device according to the first embodiment is described in reference to FIGS. 1 to 11. In the following descriptions, the left side of FIG. 5 is the front side of the travel body, the upper side of FIG. 6 is the front side of the travel body, and the direction perpendicular to the drawings when being looked at in FIGS. 7 and 8 is the front side of the travel body. In FIG. 1, 1 is the food and drink conveying device to which the present invention is applied. This food and drink conveying device 1 is provided with ordered item conveying paths 1a, 1b and 2, which are travel paths according to the present invention, that run in a kitchen area C where kitchen staff C1, C2 prepare sushi, which is an example of the food and drink, and in a customer area A where customers eat and drink in conveyor belt sushi restaurants.

A circulating conveying path 5 in rectangular loop form is provided along tables T1, T2, T3 and T4 in the customer area A so as to surround the ordered item conveying paths 1a, 1b and 2. The circulating conveying path 5 is provided with a crescent chain conveyor 4 that continuously rotates, and food and drink plates 6 on which food and drink are placed are continuously conveyed on this crescent chain conveyor 4 when the crescent chain conveyor 4 is driven.

In the conveyor belt sushi restaurants where this circulating conveying path 5 is provided, the customers can take the food and drink that are being conveyed on the circulating conveying path 5 to eat and drink and can place an individual order for food and drink that are not being conveyed on the circulating conveying path 5 with a server or through an ordering device, not shown.

In addition, individually ordered food and drink are placed on any of the ordered item conveying paths 1a, 1b and 2 within the kitchen area C after being prepared in the kitchen area C so as to be conveyed to the vicinity of the customer who placed the order.

Typically, when a customer in the customer area A places an order, the kitchen staff C1, C2 in the kitchen area C behind a partition W prepare the ordered food or drink 9 at a kitchen table 8a or 8b and place it on a food and drink plate 6 (see FIG. 7). After that, as described below, the food and drink plate 6 on which the ordered food or drink 9 is placed is placed on the travel body 7 that is provided so as to travel forwards and backwards freely over the conveyor surface 3 of the ordered item conveying paths 1a, 1b and 2.

Next, the ordered food or drink 9 placed on the travel body 7 is conveyed to the server area B through the ordered item conveying path 1a, 1b or 2. At this time, the ordered food or drink 9 that has been conveyed through the ordered item conveying path 1a or1b can be directly picked up by the customer in the area G1, G2, G3 or G5, while the ordered food or drink 9 that has been conveyed through the ordered item conveying path 2 is conveyed to the server H1 so that the server H1 hands it to the customer in the area G4.

The travel body 9 that has conveyed the ordered food or drink 9 returns to the kitchen area C after passing over the same conveyor surface 3 through the ordered item conveying path 1a, 1b or 2. That is to say, the travel body 7 is provided so as to travel forwards and backwards freely between the server area B and the kitchen area C over the conveyor surface 3 along the ordered item conveying paths 1a, 1b and 2, which are formed as independent conveying paths.

Next, the three ordered item conveying paths 1a, 1b and 2 are described. As shown in FIG. 1, the ordered item conveying paths 1a, 1b and 2 are all provided so as to run straight from the kitchen area C towards the customer area A and pass through an opening, not shown, in the partition W. Within the kitchen area C, the ordered item conveying path 2 is provided at the center and the ordered item conveying paths 1a and 1b are provided on the left and right sides of the ordered item conveying path 2 in close proximity.

That is to say, the three ordered item conveying paths 1a, 1b and 2 are provided in close proximity so that an ordered food or drink can be efficiently placed on any of these ordered item conveying paths from the same place after being prepared.

Meanwhile, within the server area B in rectangular form as viewed from the top, the ordered item conveying path 2 is provided at the center so as to divide this server area B into two. The ordered item conveying paths 1a and 1b are bent in the vicinity of the partition W to the left and right so as to be away from the ordered item conveying path 2 at the center and then run straight towards the inside of the circulating conveying path 5. Furthermore, the ordered item conveying path 1a and 1b are bent in the point close to the inside of the circulating conveying path 5 and then run along the circulating conveying path 5 towards the area G4.

That is to say, a first corner 10a (curved right) and a second corner 11a (curved left), which are the curved paths according to the present invention, are formed in the ordered item conveying path 1a in the vicinity of the partition W, and a first corner 10b (curved left) and a second corner 11b (curved right), which are the curved paths according to the present invention, are formed in the ordered item conveying path 1b in the vicinity of the partition W, respectively.

In addition, in the sections of the ordered item conveying paths 1a and 1b between the kitchen area C and the first corners 10a and 10b, between the first corners 10a and 10b and the second corners 11a and 11b, and between the second corners 11a and 11b and the area G4, the ordered item conveying paths 1a and 1b are in a straight form as straight paths 12a and 12b as described above.

Next, the ordered item conveying paths 1a, 1b and 2 as well as the travel body 7 are described in detail. Though the ordered item conveying paths 1a, 1b and 2 are different in the shape, the structure for allowing the travel body 7 to travel is the same, and therefore only the ordered item conveying path 1a is described in the following, and the descriptions of the other ordered item conveying paths 1b and 2 are omitted. Furthermore, the state where the travel body 7 is in the corner 10a or 11a in the ordered item conveying path 1a and the state where the travel body 7 is in the corner 10b or 11b in the ordered item conveying path 1b are different only in the direction in which the below-described first magnetic body 18 moves, which is opposite to each other, and therefore only the state where the travel body 7 is in the first corner 10a in the ordered item conveying path 1a is described.

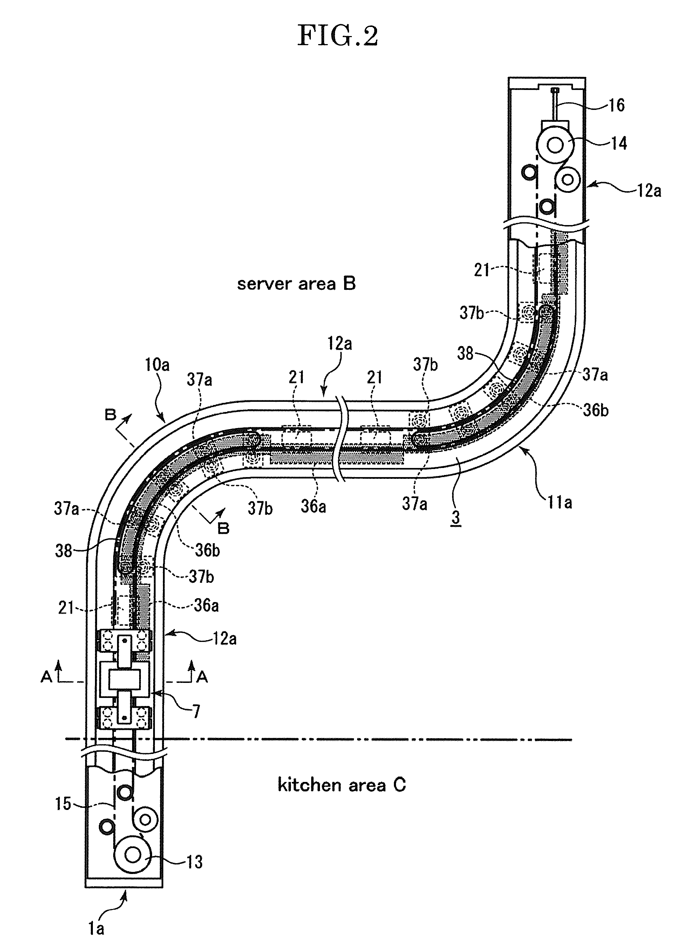

First, the structure of the ordered item conveying path 1a along which the travel body 7 travels is described. As shown in FIG. 2, a driving sprocket 13, which rotates in a plane by means of a driving motor, not shown, is provided at the end of the ordered item conveying path 1a on the kitchen area C side beneath the conveyor surface 3, and at the same time, a tension sprocket 14 is provided at the end of the ordered item conveying path 1a on the server area B side.

An annular belt body 15, which is a conveyor driving body according to the present invention, goes around the driving sprocket 13 and the tension sprocket 14, which are provided at the two ends as described above. A number of protrusions 15a that can engage with the driving sprocket 13 and the tension sprocket 14 throughout the entirety of the belt body 15 on the right side are formed on the inner surface of this belt body 15.

These protrusions 15a engage with the driving sprocket 13 and the tension sprocket 14 so that the belt body 15 is driven when the driving sprocket 13 rotates. As shown in FIGS. 2, 7 and 8, the driving sprocket 13 rotates clockwise in FIG. 2 so that the left side of this belt body 15 is a forward-moving belt 15b that is driven from the kitchen area C to the server area B and the right side is a backward-moving belt 15c that is driven from the server area B to the kitchen area C when the belt body 15 allows the travel body 7 on which food or drink is placed to travel from the kitchen area C to the server area B. Here, this tension sprocket 14 is provided with a tension adjusting portion 16 for providing tension to the belt body 15. In the following descriptions, the inner side of the belt body 15 is regarded as the inner side of the forward-moving belt body 15b and the backward-moving belt body 15c irrelevant of the direction in which the first corner 10a and the second corner 11a curve.

Furthermore, the right side of this belt body 15 is a forward-moving belt body 15b that is driven from the kitchen area C to the server area B and the left side is a backward-moving belt body 15c that is driven from the server area B to the kitchen area C when the belt body 15 allows the travel body 7 to travel from the server area B to the kitchen area C after the food or drink has been taken in the server area B, and a case where the travel body 7 travels with food or drink placed on top from the kitchen area C to the server area B is described in the following.

The belt body 15 is provided so that it can move along the conveyor surface 3 of the ordered item conveying path 1a beneath the conveyor surface 3 along which the travel body 7 travels. As shown in FIG. 7, the below-described belt brackets 17 are attached to predetermined portions of the backward-moving belt body 15b. In addition, the belt body 15 is guided by the below-described belt guides 21, forward-moving rollers 37a and backward-moving rollers 37b along the entirety that includes the straight path 12a, the first corner 10a and the second corner 11a between the driving sprocket 13 and the tension sprocket 14.

Typically, as shown in FIGS. 2 and 7, belt guides 21 are provided at the end of the straight path 12a on the side towards which the belt body 15 is driven. These belt guides 21 have two guide trenches 21a that have openings in the above and face the front and the rear on the left and right, and thus are formed in E shape that faces upward as viewed from the rear. The forward-moving belt body 15b and the backward-moving belt body 15c are contained within these guide trenches 21a so that these guide trenches 21a prevent the forward-moving belt body 15b and the backward-moving belt body 15c from swaying in the left and right directions.

In addition, a plate stands along the entirety of the straight path 12a on the right side of the backward-moving belt body 15c. The upper end portion of this plate is bent horizontally above the backward-moving belt body 15b, and thus a guide plate 36a is formed.

As shown in FIGS. 2 and 8, a number (five in the present embodiment) of guide bodies 37, which are guide means according to the present invention, are provided in the first corner 10a so that the belt body 15 can be guided in the direction in which the belt body 15 is driven. These guide bodies 37 are provided with a substrate 37c in approximately rectangular plate form as viewed from the top, and these substrates 37c are aligned along the curve with the same curvature as that of the first corner 10a in such a state that the longitudinal side of these substrates 37c is oriented in the direction of the width of the first corner 10a.

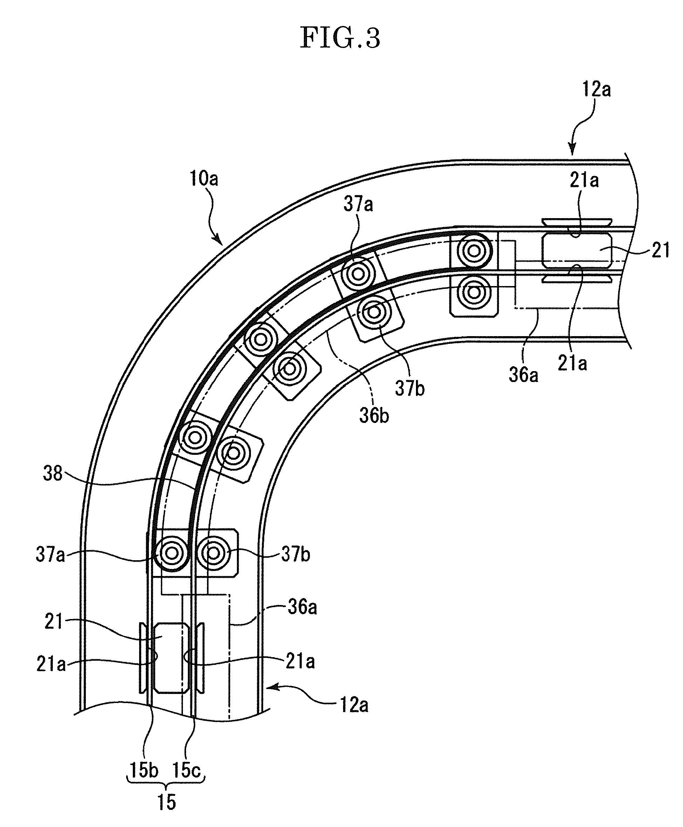

As shown in FIGS. 3 and 8, the forward-moving roller 37a provided to each substrate 37c on the outer side of the first corner 10a is supported by the inner side of the forward-moving belt body 15b so as to be pivotable in a horizontal plane. Meanwhile, the backward-moving roller 37b provided to each substrate 37c on the inner side of the first corner 10a is supported by the outer side of the backward-moving belt body 15c so as to be pivotable in a horizontal plane. The backward-moving rollers 37b make contact with the outer side of the backward-moving belt body 15c.

That is to say, the forward-moving rollers 37a and the backward-moving rollers 37b form pairs, one on the left and the other on the right of the first corner 10a, on the respective substrates 37c. A guide plate 36b having the same curvature as the first corner 10a is attached above the forward-moving rollers 37a. This guide plate 36b is attached so as to continue with the upper surface of the guide plates 36a in the straight paths 12a of which the upper surface is connected to the front and rear of the first corner 10a.

In addition, as shown in FIGS. 2 and 3, a looped sub-belt 38 made of a rubber material goes around the forward-moving rollers 37a, 37a provided in the first corner 10a and in the vicinity of the two ends on the two straight paths 12a, 12a side, and all the forward-moving rollers 37a are arranged inside the sub-belt body 38. This sub-belt body 38 intervenes between the forward-moving belt body 15b and the forward-moving rollers 37a, and thus the forward-moving belt body 15b and the forward-moving rollers 37a can be prevented from making contact with each other, which would generate abnormal sounds, and at the same time, the protrusions 15a can be prevented from being worn down.

Though in the present embodiment the sub-belt body 38 goes around a number of forward-moving rollers 37a, the sub-belt body 38 may go around the backward-moving rollers 37b in addition to the forward-moving rollers 37a or the sub-belt body 38 may go around only the backward-moving rollers 37b.

Furthermore, the forward-moving rollers 37a provided to the respective substrates 37c on the inner side of the second corner 11a are supported by the outer side of the forward-moving belt body 15b in the second corner 11a so as to be pivotable in a horizontal plane, and these forward-moving rollers 37a make contact with the outer side of the forward-moving belt body 15b. Meanwhile, backward-moving rollers 37b, which are provided to the respective substrates 37c on the outer side of the second corner 11a, are supported by the inner side of the backward-moving belt body 15c so as to be pivotable in a horizontal plane. This second corner 11a has the same structure as the first corner 10a, except that the sub-belt body 38 goes around the backward-moving rollers 37, and the sub-belt body 38 makes contact with the inner side of the backward-moving belt body 15c, and therefore the descriptions thereof are omitted.

As shown in FIG. 7, a protruding rail 22 is provided at the center of the conveyor surface 3 along the entirety of the ordered item conveying path 1a. Typically, the conveyor surface 3 is formed of a metal plate, such as of aluminum or stainless steel. The rail 22 is formed of this metal plate by applying pressure, and therefore a conveyor trench 23 in C shape that faces downward, as viewed in a cross-section, is created on the lower side of the plate from which the rail 22 is formed.

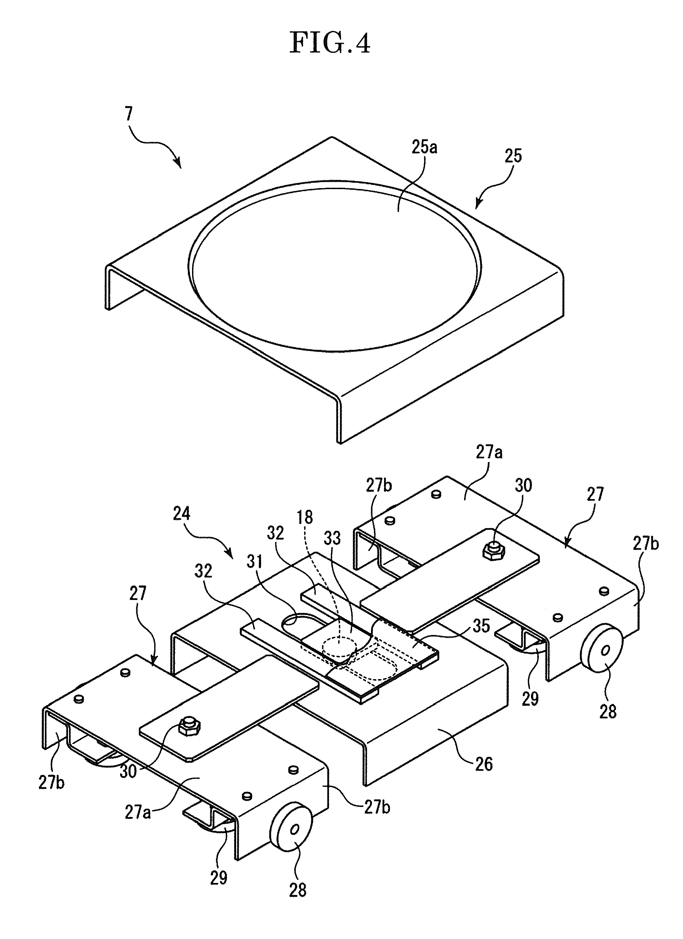

Next, the travel body 7 is described in reference to FIGS. 4, 5, 6 and 7. As shown in FIG. 4, the travel body 7 is formed of a carriage 24 that travels over the conveyor surface 3 and a tray 25 that is attached to this carriage 24 from the top and on which a food and drink plate 6 on which an ordered food or drink 9 is placed is to be placed. A recess 25a in which a food and drink plate 6 is placed is created on top of this tray 25, and this recess 25a can hold the food and drink plate 6 so that the food and drink plate 6 can be prevented from falling off the tray 25 when the food and drink plate 6 is placed in this recess 25a.

The carrier 24 is mainly formed of a base 26 and roller brackets 27 that are attached to the two locations, at the front end and the rear end, of this base 26. As shown in FIGS. 4 and 5, these roller brackets 27 are formed of a wide, rectangular horizontal plate 27a, as viewed from the top, and vertical plates 27b that run downward from the left and right ends of this horizontal plate 27a, and thus are in C shape facing downward.

Load supporting rollers 28 are attached to the outside of the two vertical plates 27b so as to be pivotable and so that the travel body 7 can travel over the conveyor surface 3. In addition, two pairs, one on the left and one on the right, of orbital rollers 29, front and rear, are attached between the two vertical plates 27b so as to be pivotable in a horizontal plane. Typically, these orbital rollers 29 are supported so as to be pivotable within the space surrounded by the horizontal plate 27a and the two vertical plates 27b and so as to be symmetrical between the left and right sides.

Furthermore, as shown in FIG. 7, the distance between the left and right orbital rollers 29 is slightly greater than the width of the rail 22 of the conveyor surface 3 so that the orbital rollers 29 at the front and rear ends of the travel body 7 are in close proximity to the rail 22 on the left and right sides when the travel body 7 is placed on the conveyor surface 3.

As described above, the orbital rollers 29 at the front and rear ends of the travel body 7 are located on the left and right sides of the rail 22 so that the travel body 7 is regulated along the travel path over the conveyor surface 3, and in addition, the orbital rollers 29 make contact with the rail 2 in order to prevent the travel body 7 from swaying to the left and right.

As shown in FIG. 6, the roller brackets 27 are supported by axes 30, which are provided on the center line L that divides the carriage 24 into two widthwise, at the front and rear ends of the carriage 24 so as to be pivotable in a horizontal plane.

In addition, a long hole 31 is provided at approximately the center of the base 26 as viewed from the top so as to be oriented along the width and penetrate the carriage 24 in the upward/downward direction. Guide pieces 32 that are oriented along the width are provided in the front and at the rear of the long hole 31 on the upper surface of the base 26. These guide pieces 32 are arranged so as to be parallel to the long hole 31 and have approximately the same length as the long hole 31.

In addition, a sliding piece 33 that is approximately in square form as viewed from the top is placed between the front and rear guide pieces 32. The length of this sliding piece 33 between the front and rear is approximately the same as the distance between the front and rear guide pieces 32 so that the front and the rear of this sliding piece 33 are guided by the two guide pieces 32, and thus the sliding piece 33 is slidable to the left and right above the long hole 31.

A first magnetic body 18, which is a linking means according to the present invention, is attached to the lower surface of this sliding piece 33. This first magnetic body 18 can slide in the width direction as the sliding piece 33 slides above the long hole 31. Here, the range in which the first magnetic body 18 can move in the width direction is regulated by the left and right ends of the inner wall of the long hole 31 with which the first magnetic body 18 can make contact. In addition, as shown in FIG. 5, the long hole 31 and the sliding piece 33 are covered, as viewed from the top, by a support plate 35 for supporting the tray 25 from the bottom, which is attached over the front and rear guide pieces 32, so that the tray 25 can be attached to the carriage 24.

As shown in FIGS. 7, 8 and 10, the below-described belt bracket 17 is attached to the forward-moving belt 15b as described above. Typically, the belt bracket 17 is in approximately L shape as viewed from the rear. In addition, an inside container recess 15d that has an opening facing inward is created in a predetermined portion on the inside (right side) of the forward-moving belt 15b, and an outside container recess 15e that has an opening facing outward is created on the outer side (left side) of the forward-moving belt 15b so as to be on the opposite side of the inside container recess 15d.

The inside container recess 15d and the outside container recess 15e penetrate in the front/rear direction, and at the same time, the lower end of the belt bracket 17 is contained in the inside container recess 15d. Meanwhile, the lower portion of a support plate 20 for attaching the belt bracket 17 to the forward-moving belt body 15b is contained in the outer container recess 15e.

As shown in FIGS. 7, 8, 9(b) and 10, the belt bracket 17 and the support plate 20 are fastened to each other by a nut and bolt in the direction of the width above the belt body 15 so that the lower ends of the belt bracket 17 and the support plate 20 hold the belt body 15 from the two sides. Furthermore, the lower end of the support plate 20 is bent towards the bottom of the belt bracket 17.

As a result, the belt body 15 is surrounded by the support plate 20 and the belt bracket 17 from the left, right and bottom, and therefore the attachment of the belt bracket 17 to the belt body 15 can be maintained. That is to say, the belt bracket 17 forms part of the linking means together with a second magnetic body 19 in the present embodiment.

In addition, a second magnetic body 19 made of a metal having ferromagnetism or a permanent magnet, which is the linking means according to the present invention, is secured to the upper end of this belt bracket 17. Furthermore, a regulating roller 39, which rotates around the second magnetic body 19 in a horizontal plane, is supported around the second magnetic body 19, and the second magnetic body 19 and the regulating roller 39, which are located at the upper end of the belt bracket 17, are placed in the above-described conveyor trench 23. Moreover, the second magnetic body 19 moves along approximately the entirety of the ordered item conveying path 1a in the conveyor trench 23 when the belt body 15 is driven.

One of the second magnetic body 19 provided beneath the conveyor surface 3 and the first magnetic body 18 attached to the travel body 7 may be made of a ferromagnetic metal and the other may be made of a permanent magnet, or the two may be made of a permanent magnet. In the case where the two are made of a permanent magnet, the different magnet poles face each other with the conveyor surface 3 in between.

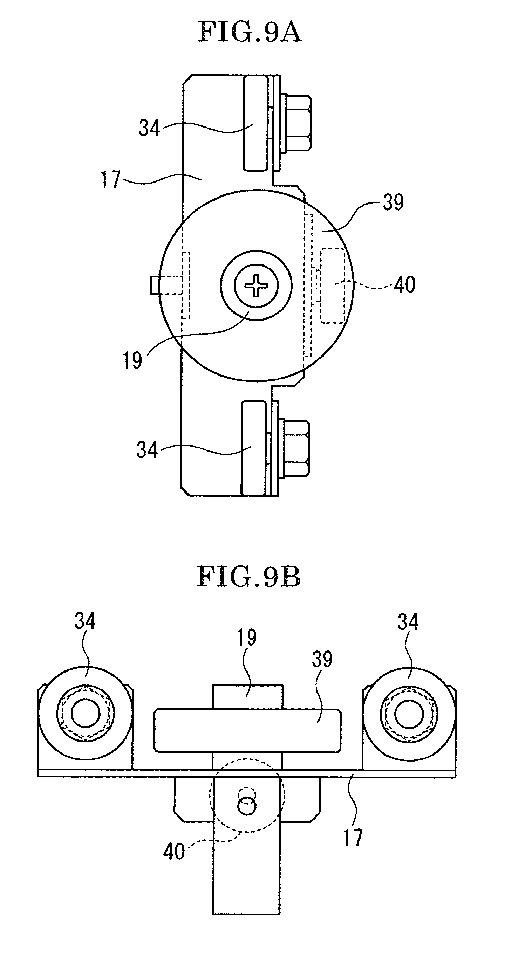

As shown in FIGS. 8 to 9(b), a pair of guide rollers 34 that make contact with the upper surface within the conveyor trench 23 is provided to the upper end of the belt bracket 17 in such a manner that one is in front of the second magnetic body 19 and the other is to the rear of the second magnetic body 19.

Typically, these guide rollers 34 are supported by the belt bracket 17 so as to be pivotable in such a direction that the belt body 15 can travel forwards or backwards so that the guide rollers 34 can travel together with the belt body 15 when the belt body 15 is driven. When the first magnetic body 18 and the second magnetic body 19, which face each other with the conveyor surface 3 in between, are attracted to each other, the second magnetic body 19 makes contact with the lower surface of the plate of which the upper surface is the conveyor surface 3 so that the belt body 15 is prevented from being lifted upwards.

In addition, an auxiliary roller 40 for supporting the load of the belt bracket 17 is supported by the right side portion of the belt bracket 17 so as to be pivotable in such a direction that the belt body 15 can travel forwards or backwards. This auxiliary roller 40 makes contact on the upper surface of the guide plates 36a and 36b so that the load of the second magnetic body, the regulating roller 39 and the belt bracket 17 can be supported when they travel over the upper surface of the guide plates 36a and 36b when the belt body 15 is driven.

The ordered item conveying path 1a and the travel body 7 are formed as described above, and thus when the belt body 15 is driven, the travel body 7 to which the first magnetic body 18 connected to the second magnetic body 19 through a magnetic force is attached can travel over the conveyor surface 3 along the ordered item conveying path 1a.

Next, the operation of the travel body 7 that travels over the conveyor surface 3 is described. First, as shown in FIG. 6, the first magnetic body 18 faces the second magnetic body 19 that moves in the conveyor trench 23 along the straight path 12a of the ordered item conveying path 1a, and therefore the first magnetic body 18 is located at approximately the center of the long hole 31, which is along the center line L that connects the front and rear axes 30.

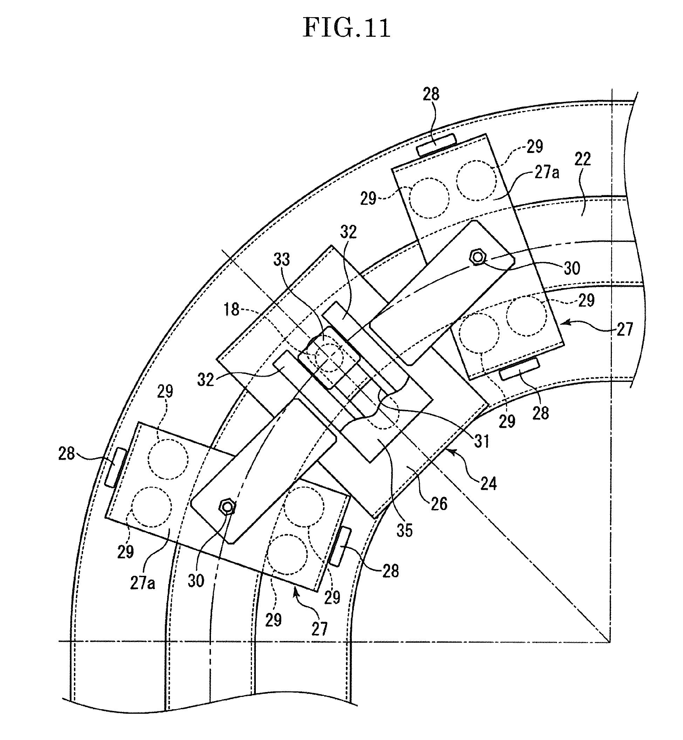

As shown in FIG. 11, when the travel body 7 enters the first corner 10a, the two roller brackets 27 start rotating around the axes 30 so as to follow the form of the rail 22 in the first corner 10a. When the two roller brackets 27 rotate, the orbital rollers 29 on the front side of the two pairs, front and rear, of the orbital rollers 29 on the inner side of the first corner 10a start making contact with the rail 22. Furthermore, as the two roller brackets 27 rotate around the axes 30, the orbital rollers 29 on the rear side of the two pairs, front and rear, of the orbital rollers 29 in the two roller brackets 27 make contact with the rail 22, and as a result, further rotation of the two roller brackets 27 around the axes 30 is regulated when the two orbital rollers 29 in each pair at the front and rear make contact with the rail 22.

When the travel body 7 travels around the first corner 10a and there is a difference in the amount of rotation between the front roller bracket 27 and the rear roller bracket 27, there is a difference in the track between the front roller and the rear roller of the travel body 7, and therefore the center line L of the travel body 7 has a locus that is more inside the first corner 10a than the locus of the second magnetic body 19 (single-dotted chain line in FIG. 11).

At this time, the first magnetic body 18 is connected to the second magnetic body 19 through a magnetic force, and therefore the first magnetic body 18 moves towards the outer side of the first corner 10a within the long hole 31 so as to maintain the position relative to the second magnetic body 19 when the travel body 7 travels around the first corner 10a with the center line L being shifted towards the inside of the first corner 10a. That is to say, the first magnetic body 18 can move so as to follow the second magnetic body 19 when the travel body 7 travels.

At this time, the second magnetic body 19 receives force directed towards the inside of the first corner 10a, which is a direction perpendicular to the direction in which the belt body 15 is driven, from the first magnetic body 18 when the first magnetic body 18 moves toward the outer side of the first corner 10a. However, the regulating roller 39 makes contact with the inner side of the conveyor trench 23 so that the second magnetic body 19 can be regulated from moving towards the inside of the first corner 10a. Though the regulating roller 39 is made to make contact with the inner surface of the conveyor trench 23 so that the second magnetic body 19 is regulated from moving in the present embodiment, a synthetic resin material having a small friction is attached to the inside of the conveyor trench 23 so that the second magnetic body 19 can make contact with this synthetic resin material, and thus the second magnetic body 19 can be regulated from moving towards the inside of the first corner 10.

When the travel body 7 again enters into the straight path 12a from the first corner 10a, the travel body 7 travels so that the center line L of the travel body 7 is located above the center of the rail 22, and therefore the first magnetic body 18 moves towards the center of the long hole 31 within the long hole 31.

As described above, the first magnetic body 18 attached to the travel body 7 moves so as to follow the second magnetic body 19, and therefore the state where the second magnetic body 19 and the first magnetic body 18 are connected can be maintained, and thus the travel body 7 can travel stably even when there is a difference between the orbits through which the travel body 7 and the belt body 15 travel.

As described above, in the food and drink conveying device 1 according to the present embodiment, the conveyor driving body is provided with the annular belt body 15 that continuously runs along an ordered item conveying path 1a, and at the same time, the guide means has a forward-moving roller 37a that is supported by the inner side of the forward-moving belt body 15b in the first corner 10a so as to be pivotable in a horizontal plane and a backward-moving roller 37b that is supported by the inner side of the backward-moving belt body 15c in the first corner 10a so as to be pivotable in a horizontal plane, and therefore the forward-moving roller 37a and the backward-moving roller 37b rotate in such a direction that the belt body 15 is driven, and thus the resistance received by the belt body 15 from the forward-moving roller 37a and the backward-moving roller 37b is only the resistance against the rotation of the forward-moving roller 37a and the backward-moving roller 37b in the direction opposite to such a direction that the belt body 15 is driven, and thus the belt body 15 can be driven smoothly in the first corner 10a. In addition, the backward-moving belt body 15c is located between the forward-moving roller 37a and the backward-moving roller 37b so that the horizontal swaying of the belt body 15 can be regulated by the forward-moving roller 37a and the backward-moving roller 37b.

In addition, the guide means is formed of a guide body 37, which is provided with forward-moving rollers 37a and backward-moving rollers 37b, and therefore when the guide body 37 is attached to the first corner 10a, the forward-moving rollers 37a and the backward-moving rollers 37b can be provided within the first corner 10a all at once.

In addition, a number of forward-moving rollers 37a and a number of backward-moving rollers 37b are provided along the first corner 10a, and therefore the belt body 15 can be bent gradually so as to be conveyed along the first corner 10a. At the same time, the swaying of the belt body 15 in a horizontal plane can be made small so that the belt body 15 can be conveyed smoothly by reducing the distance between adjacent forward-moving rollers 37a, 37a as well as the distance between adjacent backward-moving rollers 37b, 37b.

In addition, at least either the number of forward-moving rollers 37a or the number of backward-moving rollers 37b have a looped sub-belt body 38 that goes around at least some of the rollers 37a or 37b, and thus the rollers 37a or 37b around which the sub-belt body 38 goes do not make direct contact with the belt body 15, and therefore noise can be prevented from being made through the contact between the belt body 15 and the rollers 37a or 37b, and at the same time, the belt body 15 can be prevented from being worn down.

Furthermore, an inside container recess 15d is created in the belt body 15 in the direction perpendicular to the direction in which the belt body 15 is conveyed, and at the same time, one end of the belt bracket 17 is contained within and secured to the inside container recess 15d, and therefore the end of the belt bracket 17 that is connected to the belt body 15 does not make contact with the forward-moving rollers 37a or the backward-moving rollers 37b, and thus the belt bracket 17 can be prevented from causing friction with the forward-moving rollers 37a or the backward-moving rollers 37b.

### Second Embodiment

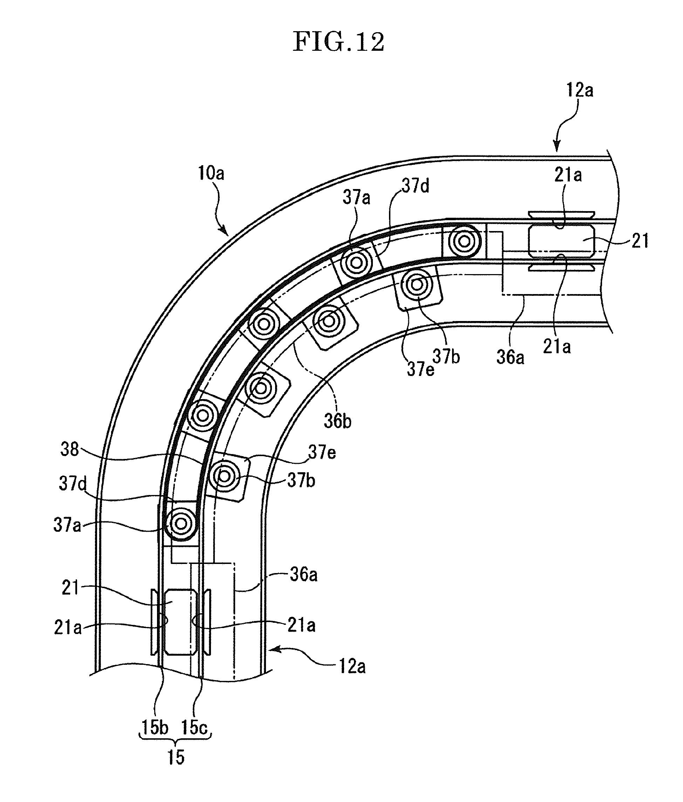

Next, the food and drink conveying device according to the second embodiment is described in reference to FIG. 12. Here, the descriptions of the same components as in the above-described embodiment are not repeated.

As shown in FIG. 12, in the food and drink conveying device 1 according to the second embodiment, a number (five in the present embodiment) of substrates 37d that are approximately square as viewed from the top are provided along the outer corner within the first corner 10a with the same curvature as the first corner 10a. The forward-moving rollers 37a are supported by these substrates 37d so as to be pivotable in a horizontal plane.

Meanwhile, a predetermined number (four in the present embodiment) of substrates 37e that are approximately square as viewed from the top and are different from the substrates 37d are provided between adjacent substrates 37d, 37d along the inner corner within the first corner 10a with the same curvature as the first corner 10a. The backward-moving rollers 37b are supported by these substrates 37e so as to be pivotable in a horizontal plane. Therefore, the forward-moving rollers 37a and the backward-moving rollers 37b are provided so as to be staggered within the first corner 10a as viewed from the top.

As described above, in the present embodiment, it is not necessary for the number of forward-moving rollers 37a to be the same as the number of backward-moving rollers 37b that guide the backward-moving belt body 15c, which is conveyed by a distance shorter than that of the forward-moving belt body 15b within the first corner 10a, and therefore the number of backward-moving rollers 37b is smaller than the number of forward-moving rollers 37a because the distance over which the backward-moving belt body 15c is conveyed is shorter than the distance over which the forward-moving belt body 15b is conveyed within the first corner 10a, and thus the cost for installing the backward-moving rollers 37b within the first corner 10a can be kept low.

Though the embodiments according to the present invention are described in reference to the drawings, the actual structure of the invention is not limited to these embodiments, and any modifications and additions should be regarded as being included in the present invention as long as the gist of the present invention is not deviated from.

For example, the above embodiments are described when the food and drink are those that can be served in a sushi restaurant, but the invention is not limited to this and can be applied to various foods and drinks.

In addition, the food and drink conveying device 1 according to the above-described embodiments is a device for conveying an ordered food or drink 9 that has been ordered by a customer, but it may be a continuously conveying device for continuously conveying food or drink that has been prepared in advance between the kitchen area C and the customer area A.

In addition, the linking means is made up of a first magnetic body 18 and a second magnetic body 19 in the above-described embodiments, but the linking means for the connection to the belt body 15 may be a rod that can be engaged with the travel body 7 through a slit provided along the entirety of the ordered item conveying path 1a so that the travel body 7 can travel over the conveyor surface 3 when the belt body 15 is driven.

Furthermore, the ordered item conveying path 1a and the travel body 7 in the above-described embodiments may be switched so that the travel body 7 may be suspended from the ordered item conveying path 1a.

Though in the above-described embodiments a number of forward-moving rollers 37a are provided in the outer corner within the first corner 10a and a number of backward-moving rollers 37b are provided in the inner corner within the first corner 10a, only one forward-moving roller 37a and only one backward-moving roller 37b may be provided within the first corner 10a in the case where the distance over which the forward-moving belt body 15b and the backward-moving belt body 15c are conveyed is sufficiently short within the first corner 10a.

Though in the above-described embodiments the sub-belt body 38 goes around the forward-moving rollers 37a, 37a, including the ones that are provided in the vicinity of the two ends of the first corner 10a on the straight path 12a, 12a side, the sub-belt body 38 may go around only some forward-moving rollers 37a, 37a with the other forward-moving rollers 37a making direct contact with the forward-moving belt body 15b.

Though in the above-described embodiments the sub-belt body 38 goes around the forward-moving rollers 37a, 37a, including the ones that are provided in the vicinity of the two ends of the first corner 10a on the straight path 12a, 12a side, the sub-belt body 38 may go around some forward-moving rollers 37a, 37a with another sub-belt body 38 going around the other forward-moving rollers 37a.

### Explanation of Symbols

- 1: food and drink conveying device
- 1a, 1b, 2: ordered item conveying path (travel path)
- 7: travel body
- 10a, 10b: first corner (curved path)
- 11a, 11b: second corner (curved path)
- 15: belt body
- 15b: forward-moving belt body
- 15c: backward-moving belt body
- 15d: inside container recess
- 17: belt bracket (linking means)
- 18: first magnetic body (linking means)
- 19: second magnetic body (linking means)
- 37: guide body (guide means)
- 37a: forward-moving roller
- 37b: backward-moving roller
- 38: sub-belt body

## Claims

1. A food and drink conveying device, comprising: a travel path having at least one curved path; a conveyor driving body provided along the travel path; a travel body that can travel along said travel path with food or drink placed on top; a linking means for connecting said conveyor driving body to said travel body; and a guide means for guiding the conveyor driving body in said curved path in the direction in which said conveyor driving body is driven, wherein said travel body travels along said travel path using said linking means when said conveyor driving body is driven, **characterized in that**
said conveyor driving body is provided with an annular belt body that continuously travels along said travel path, and in addition said guide means comprises a forward-moving roller that is supported so as to be pivotable in a horizontal plane on the inner side of the forward-moving belt body in said curve path and a backward-moving roller that is supported so as to be pivotable in a horizontal plane on the inner side of the backward-moving belt body in said curved path.

2. The food and drink conveying device according to Claim 1, **characterized in that** said guide means is formed of a guide body comprising a forward-moving roller and a backward-moving roller.

3. The food and drink conveying device according to Claim 1 or 2, **characterized in that** a number of forward-moving rollers and a number of backward-moving rollers, which are the same as said forward-moving roller and said backward-moving roller, are aligned along said curved path, respectively.

4. The food and drink conveying device according to Claim 3, **characterized in that** a looped sub-belt body goes around at least some of either said number of forward-moving rollers or said number of backward-moving rollers.

5. The food and drink conveying device according to any of Claims 1 to 4, **characterized in that** said belt body has a recess created in the direction perpendicular to the direction in which the belt body is conveyed, and one end of said linking means is contained in and fixed to the recess.
